# EUROPEAN PATENT SPECIFICATION

(11) **EP 2 942 200 B1**
(45) Date of publication and mention of the grant of the patent: **12.12.2018**
(21) Application number: 15382236.6
(22) Date of filing: 07.05.2015
(51) Int. Cl.: C09D 11/36, C09D 11/322, C09D 17/00, C09D 11/00, B41M 5/00

(54) **METHOD FOR MANUFACTURING A DIGITAL PRINTING INK FOR PRINTING ON CERAMICS AND INK OBTAINED**
HERSTELLUNGSPROZESS FÜR TINTE ZUM DIGITALEN BEDRUCKEN VON KERAMIK UND DIESE TINTE
PROCÉDÉ DE FABRICATION D'UNE ENCRE POUR IMPRIMER NUMÉRIQUEMENT SUR CÉRAMIQUE ET LADITE ENCRE

(30) Priority: 07.05.2014 ES 201430671
(43) Date of publication of application: 11.11.2015
(73) Proprietor: Kao Corporation, Chuo-ku Tokyo 103-8210 (JP)
(72) Inventor: López Muñoz, Antonio, 08191 Rubi (ES); Fernández López, Juan Carlos, 08191 Rubi (ES)
(74) Representative: Hoffmann Eitle

(56) References cited:
- EP-A1- 2 083 052
- EP-A1- 2 159 269
- WO-A1-2014/025539
- US-A1- 2012 026 224
- US-A1- 2013 312 636

## Description

Method for manufacturing a digital printing ink for printing on ceramics and ink thus obtained that comprises: a first stage wherein between 30 and 50% of the total in weight of isoparaffinic aliphatic hydrocarbons, between 20 and 40% of the total in weight of carboxyl esters and/or propanoic acid esters, and between 1 and 10%of the total in weight of dispersing agents are mixed, in a mixing machine; in a second stage at least one pigment is introduced, adding them slowly, in a proportion of between 25 and 50% of the total in weight, leaving a liquid mixture, with said liquid mixture recirculating in a grinding mill; in a third stage the liquid mixture is passed through a sieve; in a fourth stage the sieved mixture reaches a hopper where it is directed to a refrigerated tank with high speed cooling; in a fifth stage the cooled mixture is directed through a cooling coil; and in a sixth stage the mixture from the fifth stage is passed through a mill of ceramic balls between 0,2 and 0,7 mm until the pigment in said liquid mixture obtains the desired particle size, producing an end ink.

### BACKGROUND OF THE INVENTION

In the state of the art different methods and digital ceramic printing inks for digital printing are known. In particular, they are aqueous inks mainly.

So, Patent PCTWO03078120, "METHOD OF PRODUCING CERAMIC TILES", in the name of ESMALGLASS, from the year 2002, where a ceramic tile has to be partially or completely covered with the decorative enamels or inks applied using any conventional technique, and in which process no excessive amounts of chemical waste are produced. It consists in carrying out a first atomised pressing, coloured or not, and a top layer of atomised enamels or another type of material (grit, granulates, scales, etc.) if necessary using any of the double loading mechanisms available on the market; with the first pressing stage being carried out at a pressure below the definitive value and with a smooth punch, obtaining a soft tile already partially decorated. This tile is decorated subsequently with screen printing enamels or inks using any conventional technique, and then a second pressing stage is carried out at the definitive pressure with a punch that can have the necessary relief to give the tile part is definitive appearance. The tile then undergoes the drying and cooking stage. An additional stage of applying enamel in grain is planned in a stage prior to the second pressing, using an adhesive emulsion on the surface of the tile. If it is desired to obtain special effects, more decorative motifs can be applied.

Also Spanish Patent No. 9702443 is known (ES2154526) "MEJORAS INTRODUCIDAS EN LA SOLICITUD DE PATENTE DE INVENCIÓN P-9602488/7, VEHÍCULOS Y TINTAS ENDURECIBLES POR UNA RADIACIÓN ULTRAVIOLETA Y PROCEDIMIENTO DE UTILlZACIÓN DE LOS MISMOS EN LA FABRICACIÓN DE BALDOSAS CERAMICAS" [IMPROVEMENTS MADE TO PATENT APPLICATION P-9602488/7, VEHICLES AND INKS HARDENED BY UV RADIATION AND METHOD FOR USING THE AFOREMENTIONED TO MANUFACTURE CERAMIC TILES], from the year 1997, which relates to some improvements made to Patent Application No.P-9602488/7 for: vehicles and inks hardened by UV radiation and method for using them to manufacture ceramic tiles, with said vehicles being made up of (a) one or several polymerisable oligomers containing reactive end functional groups of the acrylate or methacrylate type, that can be selected from a polyester, a polyurethane, an acrylic or any combination thereof (b) optionally, one or several polymerisable monomers containing reactive functional groups of the acrylate or methacrylate type, possibly monofunctional or polyfunctional, (c) a compound photoinitiating system capable of effectively starting the polymerisation reaction, both inside and on the surface, through exposure to UV radiation, (d) one or several non-reactive liquids, in which the previous components are diluted or dispersed; these improvements are characterised in that the component (a) is in the form of an emulsion.

Patent PCT No. WO2007036942, "INKPROVIDING ETCH-LIKE EFFECT FOR PRINTING ON CERAMIC SURFACES", from the year 2006, in the name of the Israeli firm DIP TECH. LTD, which relates to an inkjet ink composition for printing on a ceramic substrate that comprises: (a) a liquid vehicle; (b) submicron particles of binding composition having a melting point below 600°C; and (c) submicron particles causing an etch-like effect, with said submicron particles having a high melting point Zn that contains glass frit, made up of SiO2, ZnO, and B2O3, or a combination thereof with particles of metallic oxide, with said submicron particles causing an etch-like effect that has a melting point of at least 50°C above the melting point of said submicron particles of the binding composition.

### BRIEF DESCRIPTION OF THE INVENTION

This invention is an advance in the field of ink manufacturing, particularly regarding inks for digital printing on ceramics.

Traditionally solid materials have been used, in a dry state, for grinding. This has led to very high energy costs, because it is more difficult to grind a solid than a liquid mixture.

Also in many cases, a pre-grinding stage is required in pigment dispersion.

The solid mixtures have the drawback that they can obstruct the hoppers and the sieves if they go lumpy, which means the machines have to be cleaned very frequently.

With respect to the closest document, Patent WO2007036942. If we analyse the end result, that is, the ink, even when both are inkjet inks for ceramic surfaces, the closest document has a problem at the time of printing.

So, in the closest document, in very damp atmospheres, due to the heat which is generated at the time of printing, a condensation vapour is produced which mixes with the inkjet ink, reducing its quality, since it is not as pure. This is very important when performing high quality printing, when the colour tones are valued.

This way, the ink resulting from this method is an ink that is incompatible with water or with the condensation vapour that is produced in the inkjet ink heads, as a consequence of including a hydrocarbon, which allows the ink that leaves the printer head to be the same that is printed on to the ceramic surface, that is, thus respecting the colours in a reliable way.

A further achievement is that the ink does not have any contaminating elements or impurities, due to the fact that it is not mixed with aqueous agents.

This is so because the frailty of the mixture is obtained through thermal shock, so that when it is passed through the mill of balls in the fifth stage, the desired size is obtained.

A first object of this invention is a method for manufacturing a digital printing ink for printing on ceramics characterised in that it comprises: a first stage wherein between 30 and 50% of the total in weight of isoparaffinic aliphatic hydrocarbons, between 20 and 40% of the total in weight of carboxyl esters comprising propanoic acid esters, and between 1 and 10% of the total in weight of dispersing agents are mixed, in a mixing machine; in a second stage at least one pigment is introduced, slowly added, in a proportion of between 25 and 50% of the total in weight, leaving a liquid mixture, with said liquid mixture recirculating in a grinding mill; in a third stage the liquid mixture is passed through a sieve; in a fourth stage the sieved mixture reaches a hopper where it is directed to a refrigerated tank with high speed cooling; in a fifth stage the cooled mixture is directed through a cooling coil; and in a sixth stage the mixture from the fifth stage is passed through a mill of ceramic balls between 0,2 and 0,7 mm until the pigment of said liquid mixture obtains the desired particle size, producing an end ink.

A second object of this invention is a digital printing ink for printing on ceramics, characterised in that it comprises: between 25 and 50% of the total in weight of pigments, between 30 and 50% of the total in weight of isoparaffinic aliphatic hydrocarbons, between 20 and 40% of the total in weight of carboxyl esters comprising propanoic acid esters, and between 1 and 10% of the total in weight of dispersing agents, being an ink with a viscosity between 25 and 30 cP at 25°C and between 10 and 14 cP between 35 and 40°C.

### SPECIFIC EMBODIMENT OF THE INVENTION

So in a specific embodiment of this invention, the method for manufacturing a digital printing ink for printing on ceramics comprises the following stages: A first stage wherein isoparaffinic aliphatic hydrocarbons are mixed with carboxyl esters and/or propanoic acid esters, with dispersing agents, in a mixing machine.

The initial proportions are as follows:
▪ between 30 and 50% of the total in weight of isoparaffinic aliphatic hydrocarbons,
▪ between 20 and 40% of the total in weight of carboxyl esters and/or propanoic acid esters, and
▪ between 1 and 10% of the total in weight of dispersing agents.

As indicated above, hydrocarbons are used so that the ink that leaves the heads cannot be contaminated. At the time of printing, a condensation vapour is produced which, if the ink is water soluble, will mix with the ink and its colours and properties become contaminated.

Optionally it could be possible to introduce between 0,1 and 10% of the total in weight of polymers. They are introduced because they help to stabilise some formulae.

In the second stage one or several pigments are introduced, slowly added, leaving a liquid mixture, with said liquid mixture recirculating in a grinding mill that crushes said mixture. The slow addition is performed to achieve a good dispersion of the pigment or pigments of the mixture from the first stage.

In a third stage the liquid mixture is passed through a sieve that filters the particles that have not been ground appropriately, or with a pre-determined size.

The fourth and fifth stages have the function of cooling the mixture from the third stage. This is because a thermal shock is required in said mixture, which leaves the mixture more fragile so that in the sixth stage the desired grain size can be obtained.

In a fourth stage the sieved mixture, hot or very hot due to the action of the grinding mill, reaches a hopper where it is directed to a refrigerated tank with high speed cooling, in order to create said thermal shock.

Subsequently, in the fifth stage the mixture is directed by a cooling coil to lower the temperature of the mixture even more. This is done to cause a second thermal shock when the mixture enters into the balls mill, which due to friction are at a high temperature.

So, lastly, in the sixth stage, the mixture from the fifth stage is passed through a mill of ceramic balls between 0,2 and 0,7 mm, which produces high temperatures inside the mill, increasing the temperature of the mixture, and obtaining the fragility of said mixture which also facilitates the action of said ball mills.

The mixture will continue in the mills until the pigment or pigments of said liquid mixture reach the desired particle size, producing an end ink.

The digital printing ink for printing on ceramics obtained comprises the following percentages:
▪ between 25 and 50% of the total in weight of pigments
▪ between 30 and 50% of the total in weight of isoparaffinic aliphatic hydrocarbons,
▪ between 20 and 40% of the total in weight of carboxyl esters and/or propanoic acid esters, and
▪ between 1 and 10% of the total in weight of dispersing agents, being an ink with a viscosity between 25 and 30 cP at 25°C and between 10 and 14 cP between 35 and 40°C.

The measurement at 25°C is carried in a laboratory and the measurement at 35 to 40°C takes place because it is the head shooting temperature, and thus the temperature margin.

Optionally, polymers can be introduced so that some formulae are more stable. The proportion would be between 0,1 and 10% of the total in weight of said polymers.

As an example, a series of examples of inks obtained according to the previous method is detailed below:

### EXAMPLE 1

Ester (Waglinol): 12% (propanoic acid esters)
Dispersing agent (SOLSPERSE J930): 8%
Distilled petrol hydrocarbon (ISOPAR V): 37%
Ester (CERAPHYL ODS): 13% (carboxyl esters)
Pigment (Siccocer Cyan): 30%
Which produces a cyan colour ceramic ink

### EXAMPLE 2

Ester (Waglinol): 10% (propanoic acid esters)
Dispersing agent (SOLSPERSE J930): 10%
Distilled petrol hydrocarbon (ISOPAR V): 35%
Ester (CERAPHYL ODS): 10% (carboxyl esters)
Pigment (Amarillo Siccocer): 35%
Which produces a yellow colour ceramic ink

### EXAMPLE 3 (formula with polymer)

Ester (Waglinol): 18% (propanoic acid esters)
Dispersing agent (SOLSPERSE J930): 10%
Distilled petrol hydrocarbon (ISOPAR V): 37%
Ester (CERAPHYL ODS): 5% (carboxyl esters)
Polymer (EFKA 1502): 2%
Pigment (Red Brown Siccocer): 28%
Which produces a brown colour ceramic ink.

To obtain the colours, the following pigments, for example, can be used:
▪ Cyan: Cobalt, Aluminium and Chromespinel.
▪ Yellow: Zirconium, Silicon and Praseodymiumspinel.
▪ Blue: Cobalt (II) and Aluminium oxidespinel.
▪ Red Brown: Zirconium, Silicon and Ironspinel.
▪ Black: Cobalt, Manganese, Iron and Chromespinel.
▪ Brown: Zinc, Iron and Chromespinel.

This invention describes a new method for manufacturing digital printing ink for printing on ceramics and ink thus obtained. The examples mentioned here are non-limiting of this invention; therefore it can have different applications and/or adaptations, all within the scope of the following claims.

## Claims

1. Method for manufacturing a digital printing ink for printing on ceramics, **characterised in that** it comprises:
- a first stage wherein it is mixed:
▪ between 30 and 50% of the total in weight of isoparaffinic aliphatic hydrocarbons,
▪ between 20 and 40% of the total in weight of carboxyl esters comprising propanoic acid esters, and
▪ between 1 and 10%of the total in weight of dispersing agents, in a mixing machine,
- in a second stage at least one pigment is introduced, slowly added, in a proportion of between 25 and 50% of the total in weight, leaving a liquid mixture, with said liquid mixture recirculating in a grinding mill,
- in a third stage the liquid mixture is passed through a sieve,
- in a fourth stage the sieved mixture reaches a hopper where it is directed to a refrigerated tank with high speed cooling,
- in a fifth stage the cooled mixture is directed through a cooling coil, and
- in a sixth stage the mixture from the fifth stage is passed through a mill of ceramic balls between 0,2 and 0,7 mm until the pigment in said liquid mixture obtains the desired particle size, producing an end ink.

2. Method, according to claim 1, **characterised in that** the first stage comprises between 0,1 and 10% of the total in weight of polymers.

3. Digital printing ink for printing on ceramics **characterised in that** it comprises:
- between 25 and 50% of the total in weight of pigments
- between 30 and 50% of the total in weight of isoparaffinic aliphatic hydrocarbons,
- between 20 and 40% of the total in weight of carboxyl esters comprising propanoic acid esters, and
- between 1 and 10% of the total in weight of dispersing agents, being an ink with a viscosity between 25 and 30 cP at 25ºC and between 10 and 14 cP between 35 and 40ºC.

4. Ink, according to claim 3, **characterised in that** it comprises between 0,1 and 10% of the total in weight of polymers.

## Patentansprüche

1. Verfahren zur Herstellung einer digitalen Drucktinte zum Drucken auf Keramiken, **dadurch gekennzeichnet, dass** es umfasst:
- einen ersten Schritt, worin gemischt wird:
• zwischen 30 und 50 % des Gesamtgewichts an isoparaffinischen aliphatischen Kohlenwasserstoffen,
• zwischen 20 und 40 % des Gesamtgewichts an Carbonsäureestern, die Propansäureester umfassen, und
• zwischen 1 und 10 % des Gesamtgewichts an Dispergiermitteln,
in einer Mischmaschine,
- in einem zweiten Schritt wird zumindest ein Pigment eingeführt, das langsam in einem Anteil von zwischen 25 und 50 % des Gesamtgewichts zugegeben wird, was zu einer flüssigen Mischung führt, wobei die flüssige Mischung in einer Mahlmühle umgewälzt wird,
- in einem dritten Schritt die flüssige Mischung durch ein Sieb passiert wird,
- in einem vierten Schritt die gesiebte Mischung einen Trichter erreicht, worin sie zu einem gefüllten Tank mit High-Speed-Kühlung zugeführt wird,
- in einem fünften Schritt die gekühlte Mischung durch eine Kühlschlange geleitet wird,
- in einem sechsten Schritt die Mischung von dem fünften Schritt durch eine Mühle mit keramischen Kugeln zwischen 0,2 und 0,7 mm geführt wird, bis das Pigment in der flüssigen Mischung die gewünschte Partikelgröße erhält, wodurch eine End-Tinte erhalten wird.

2. Verfahren gemäß Anspruch 1, **dadurch gekennzeichnet, dass** der erste Schritt zwischen 0,1 und 10 % des Gesamtgewichts an Polymeren umfasst.

3. Digitale Drucktinte zum Drucken auf Keramiken, **dadurch gekennzeichnet, dass** sie umfasst:
- zwischen 25 und 50 % des Gesamtgewichts an Pigmenten,
- zwischen 30 und 50 % des Gesamtgewichts an isoparaffinischen aliphatischen Kohlenwasserstoffen,
- zwischen 20 und 40 % des Gesamtgewichts an Carboxylestern, die Propansäureester umfassen, und
- zwischen 1 und 10 % des Gesamtgewichts an Dispergiermitteln,
wobei sie eine Tinte mit einer Viskosität zwischen 25 und 30 cP bei 25°C und zwischen 10 und 14 cP zwischen 35 und 40°C ist.

4. Tinte gemäß Anspruch 3, **dadurch gekennzeichnet, dass** sie zwischen 0,1 und 10 % des Gesamtgewichts an Polymeren umfasst.

## Revendications

1. Procédé de fabrication d'une encre d'impression numérique pour imprimer sur céramique, **caractérisé en ce qu'**il comprend :
- une première étape dans laquelle sont mélangés :
-- entre 30 et 50% du total en poids d'hydrocarbures aliphatiques isoparaffiniques,
-- entre 20 et 40 % du total en poids d'esters carboxyliques comprenant des esters d'acide propanoïque, et
-- entre 1 et 10 % du total en poids d'agents de dispersion, dans une machine de mélange,
- une deuxième étape dans laquelle au moins un pigment est introduit, ajouté lentement, dans une proportion entre 25 et 50% du total en poids, en laissant un mélange liquide, ledit mélange liquide recirculant dans un broyeur,
- une troisième étape dans laquelle le mélange liquide est passé à travers un tamis,
- une quatrième étape dans laquelle le mélange tamisé atteint une trémie où il est dirigé vers une cuve réfrigérée avec un refroidissement à vitesse rapide,
- une cinquième étape dans laquelle le mélange refroidi est dirigé à travers un serpentin de refroidissement, et
- une sixième étape dans laquelle le mélange provenant de la cinquième étape est passé à travers un broyeur de billes de céramique entre 0,2 et 0,7 mm jusqu'à ce que le pigment dans ledit mélange liquide obtienne la taille particulaire souhaitée, en produisant une encre finale.

2. Procédé selon la revendication 1, **caractérisé en ce que** la première étape comprend entre 0,1 et 10 % du total en poids de polymères.

3. Encre d'impression numérique pour imprimer sur céramique **caractérisée en ce qu'**elle comprend :
- entre 25 et 50 % du total en poids de pigments
- entre 30 et 50 % du total en poids d'hydrocarbures aliphatiques isoparaffiniques,
- entre 20 et 40 % du total en poids d'esters carboxyliques comprenant des esters d'acide propanoïque, et
- entre 1 et 10 % du total en poids d'agents de dispersion,
qui est une encre avec une viscosité entre 25 et 30 cP à 25 °C et entre 10 et 14 cP entre 35 et 40 °C.

4. Encre, selon la revendication 3, **caractérisée en ce qu'**elle comprend entre 0,1 et 10 % du total en poids de polymères.
